# EUROPÄISCHE PATENTANMELDUNG

(11) **EP 3 570 233 A1**
(43) Veröffentlichungstag der Anmeldung: **20.11.2019**
(21) Anmeldenummer: 18173018.5
(22) Anmeldetag: 17.05.2018
(51) Int. Cl.: G06Q 10/08, G06Q 50/08, G06Q 50/28, G06Q 50/04

(54) **VERFAHREN UND SYSTEM ZUR ERFASSUNG UND VERWALTUNG EINER VIELZAHL VON DATEN EINES BAUELEMENTS**

(71) Anmelder: SCHÖCK BAUTEILE GmbH, 76534 Baden-Baden (DE)
(72) Erfinder:
(74) Vertreter: Kietzmann, Lutz

(57) **Zusammenfassung**

Es ist ein computergestütztes Verfahren zur Erfassung und Verwaltung einer Vielzahl von Daten eines Bauelements zum Errichten eines Bauwerks angegeben, mittels welchem in der Bauplanungsphase vor der Herstellung des Bauelements, über die Herstellung und den anschließenden Einbau des Bauelements an einer Baustelle bauelementbezogene Daten in einer Datenbank hinterlegt werden. Weiterhin ist ein System, mittels dessen Verfahrensschritte des vorgenannten Verfahrens ausgeführt werden können angegeben.

## Beschreibung

### TECHNISCHES GEBIET

Die Erfindung betrifft ein computergestütztes Verfahren zur Erfassung und Verwaltung einer Vielzahl von Daten eines Bauelements zum Errichten eines Bauwerks, ein System zur Datenverarbeitung einer Vielzahl von Daten eines Bauelements, ein Kommunikationsgerät, ein Computerprogrammprodukt und ein computerlesbares Medium.

### HINTERGRUND DER ERFINDUNG

Bei der Planung und Durchführung eines Bauvorhabens ist eine Vielzahl von Personen, wie beispielswiese ein oder mehrere Bauherren, Planer und/oder Architekten, sowie Statiker und Baustellenleiter involviert. Im Rahmen von Planung und Durchführung fallen dementsprechend viele Informationen und Daten, das geplante bzw. in der Bauphase befindliche Bauvorhaben betreffend, an. Diese Informationen und Daten können unter anderem die Planungsphase, beispielsweise die Auswahl eines bestimmten zu verwendenden Baustoffs oder Bauelements durch beispielsweise den Planer betreffen, oder auch eine geplante bzw. avisierte Bauzeit, den Ablauf unterschiedlicher Bauschritte.

Es sind beispielsweise Programme bekannt, die eine Modellierung eines Bauvorhabens ermöglichen. Die Erfassung und das gezielte Speichern von spezifischen digitalisierten Daten im Zusammenhang der Planung und Durchführung eines Bauvorhabens sind derzeit jedoch noch nicht standardmäßig vorgesehen.

### ZUSAMMENFASSUNG DER ERFINDUNG

Die Aufgabe der vorliegenden Erfindung kann darin gesehen werden, die Erfassung und Speicherung aussagekräftiger Daten eines Bauelements zum effizienten Einbau an einer Baustelle zu ermöglichen, um Planungs- und Bauzeit zu verkürzen.

Die Aufgabe wird durch die Gegenstände der unabhängigen Patenansprüche gelöst. Weiterbildungen und Ausführungsformen sind in den Unteransprüchen und der nachfolgenden Beschreibung enthalten.

Die im Folgenden beschriebenen Ausführungsbeispiele betreffen gleichermaßen das computergestützte Verfahren, das System zur Datenverarbeitung, das Kommunikationsgerät. Mit anderen Worten, können Merkmale, die im Folgenden in Bezug auf das computergestützte Verfahren beschrieben werden, ebenso in das System implementiert sein, und als Merkmale oder Teilaspekte des Kommunikationsgeräts angesehen werden, und umgekehrt.

Gemäß einem Aspekt der Erfindung ist ein computergestütztes Verfahren zur Erfassung und Verwaltung einer Vielzahl von Daten eines Bauelements zum Errichten eines Bauwerks angegeben. Die Vielzahl an Daten fällt im Zusammenhang der Erfindung beispielsweise im Zuge der Planung eines Bauvorhabens, der Herstellung des Bauelements sowie der Lieferung des Bauelements zur Baustelle und des Einbaus auf der Baustelle an. Dabei weist das Verfahren die im Folgenden beschriebenen Schritte auf. In einem ersten Schritt werden Stammdaten des Bauelements erzeugt und in einer Datenbank hinterlegt bzw. gespeichert. Dabei umfassen die Stammdaten produktspezifische Eigenschaften des Bauelements. Produktspezifische Eigenschaften des Bauelements können zumindest eine der Eigenschaften Material, Gewicht, räumliche Abmessungen, eine Seriennummer, Bemessungswiderstände, eine Brandschutzklassifizierung, Wärmeleitfähigkeiten, Steifigkeiten und/oder Verformungseigenschaften, sowie Qualitätssicherungsdaten umfassen. Alternativ oder zusätzlich werden im ersten Schritt individuelle Stammdaten des Bauelements erzeugt und in der Datenbank gespeichert. Die individuellen Stammdaten umfassen dabei einbauerforderliche produktspezifische Eigenschaften des Bauelements. In einem zweiten Verfahrensschritt wird das Bauelement in einem Fertigungsbetrieb hergestellt. Das hergestellt Bauelement weist dabei in den Stammdaten und/oder in den individuellen Stammdaten angegebene Eigenschaften auf. In einem nächsten Schritt werden Produktionsdaten des Bauelements empfangen und in der Datenbank gespeichert. Ein weiterer Schritt betrifft den Einbau des Bauelements auf einer Baustelle. Darauffolgend werden in einem nächsten Schritt Einbaudaten des Bauelements empfangen und in der Datenbank gespeichert. Dabei umfassen die Einbaudaten baustellenspezifische und lagespezifische Daten des Bauelements. Weiterhin ist ein Schritt vorgesehen, in dem ein Soll-Zustand mit einem Ist-Zustand verglichen wird. Dabei beschreibt der Soll-Zustand einen angestrebten Einbauzustand des Bauelements und der Ist-Zustand bezieht sich auf den vorliegenden Einbauzustand. In einem weiteren Schritt wird ein nächster Bauschritt freigegeben.

In anderen Worten ist ein computergestütztes Verfahren angegeben, das ein Abbild bzw. ein digitales Pendant eines Bauelements erzeugt, in dem das Bauelement betreffende Daten in digitalisierter Form gespeichert werden. Dabei werden in ersten Verfahrensschritten das noch herzustellende Bauelement betreffende Daten in einer Datenbank hinterlegt. Die entsprechenden Daten können sich auf Eigenschaften des noch herzustellenden Bauelements beziehen. Die Herstellung des Bauelements erfolgt in einem folgenden Schritt. Daten zu dem digitalen Pendant liegen damit bereits während einer Planungsphase und vor dem Herstellen des physischen Bauelements vor. In diesen Daten erfasste, das herzustellende Bauelement betreffende, Eigenschaften werden bei der Herstellung des physischen Bauelements berücksichtigt.

Bei dem Bauelement kann es sich beispielsweise um ein Dämmelement, ein Schalldämmelement, ein Bewehrungselement, oder ein Abschalelement handeln.

Die Stammdaten, welche produktspezifische Eigenschaften des Bauelements umfassen, können mittels einer Erzeugungseinheit erzeugt werden. Dabei kann die Erzeugungseinheit Teil eines Systems zur Datengenerierung und -verarbeitung sein. Die Erzeugung der Stammdaten z.B. mittels der Erzeugungseinheit des Systems kann im Zuge einer Bauplanung durch einen Nutzer, beispielsweise einen Bauplaner oder Architekten veranlasst werden. Der Nutzer kann beispielsweise eine Planungssoftware verwenden, mittels derer die Erzeugungseinheit angewiesen wird, die Stammdaten von beim Bau zu verwendenden Bauelementen zu erzeugen. Dabei können die produktspezifischen Eigenschaften entsprechende Eigenschaften von unterschiedlichen, jedoch in der Fertigung standardmäßig hergestellten Bauelementen umfassen. Beispielsweise können in einem Fertigungsbetrieb standardmäßig unterschiedliche Serien von Bauelementen mit unterschiedlichen Eigenschaften z.B. hinsichtlich des Gewichts oder der Wärmeleitfähigkeit hergestellt werden. Die produktspezifischen Eigenschaften, die unter anderem in die Stammdaten einfließen, können sich auf die Eigenschaften eines Bauelements aus einer spezifischen, standardmäßig hergestellten Serie beziehen.

Individuelle produktspezifische Eigenschaften des Bauelements können zumindest eine der Eigenschaften Einbauposition, Einbauanleitung, Bauobjektdaten, Systeminformationen z.B. das Nachbarelement und/oder den lichten Abstand zum Nachbarelement betreffend, eine erforderliche Qualität des Ortbetons umfassen.

Die individuellen Stammdaten, welche individuelle produktspezifische Eigenschaften des Bauelements umfassen, können ebenfalls mittels einer Erzeugungseinheit, welche Teil eines Systems zur Datengenerierung und - verarbeitung sein kann, erzeugt werden. Auch in diesem Fall kann die Erzeugung der Stammdaten z.B. mittels der Erzeugungseinheit des Systems während einer Bauplanung durch beispielsweise einen Bauplaner oder Architekten veranlasst werden. Im Unterschied zu den Stammdaten, welche produktspezifische Eigenschaften des Bauelements umfassen, die sich auf standardisierte Bauelementeigenschaften einer bestimmten Standard-Serie von Bauelementen beziehen können, ermöglichen die individuellen Stammdaten eine zusätzliche Individualisierung des herzustellenden Bauelements in der Planungsphase.
Dies kann beispielsweise erwünscht sein, wenn a priori bekannt ist, dass aufgrund gewünschter Gebäude-Geometrien oder - Abmessungen Standardprodukte nicht verbaut werden können. In solchen Fällen können zusätzliche Einbauinformationen erforderlich sein, um einen sachgemäßen Einbau zu gewährleisten, welche als Teil der individuellen Stammdaten in der Datenbank hinterlegt werden können. Auch kann es beispielsweise aufgrund spezieller Expositionsklassen (beinhalten Umwelt und Bauteilanforderungen) am Einbauort erforderlich sein, dass der Ortbeton eine bestimmte Qualität aufweist, wobei dies ebenfalls unter den individuellen Stammdaten erfasst werden kann.

Produktionsdaten können unter anderem Daten zum Fertigungsbetrieb, wie z.B. Ortsdaten und weitere Informationen zum Betrieb, zum Zeitpunkt der Fertigung, zu den eingesetzten Materialien und deren jeweilige Quantifizierung (z.B. Anzahl der Zugstäbe, o.ä.), möglichen Abweichungen von den Standardmaterialien und/oder möglichen Zwischenfällen bei der Produktion umfassen.

Die Datenbank, in der die auf das Bauelement bezogenen Daten gespeichert werden, kann auf einem Computer, einem Server oder in einer Cloud hinterlegt sein. Das Erzeugen von Daten, die in der Datenbank gespeichert werden sollen, kann durch eine Erzeugungseinheit eines Computers durchgeführt werden. Daten, die in der Datenbank gespeichert werden sollen, können auch durch eine Empfangseinheit beispielsweise eines Computers empfangen werden und durch eine Speichereinheit des Computers entsprechend in der Datenbank hinterlegt werden.

Der Soll-Zustand, welcher einen angestrebten Einbauzustand beschreibt, kann unter anderem Daten zur angestrebten horizontalen und vertikalen Ausrichtung des Bauelements, seiner angestrebten Orientierung, einer möglichen angestrebten Verdrehung oder Rotation, seinem angestrebten relativen Abstand zu einem oder mehreren Nachbarelementen, und/oder seine angestrebten GPS-Positionsdaten, die die geplante Lage des Bauelements angeben, umfassen. Entsprechend umfasst der Ist-Zustand die zu den vorgenannten Daten tatsächlich vorliegenden, d.h. zum Beispiel Daten zur tatsächlichen horizontalen und vertikalen Ausrichtung des Bauelements.

Gemäß einem Ausführungsbeispiel der Erfindung ist die Freigabe des nächsten Bauschritts vorgesehen, wenn die Abweichung oder die Abweichungen des Ist-Zustands vom Soll-Zustands innerhalb einer vorgegebenen Toleranz liegt oder liegen. Beispielsweise kann die Abweichung zwischen Ist- und Sollzustand innerhalb einer vorgegebenen Toleranz liegen, wenn der lichte Abstand zweier benachbarter Elemente, d.h. der lichte Abstand zwischen dem Bauelement und einem seiner Nachbarelemente <= 3 mm beträgt. Die Abweichungen zwischen Ist- und Sollzustand können z.B. auch innerhalb einer vorgegebenen Toleranz liegen, wenn die Elemente an keiner Stelle mehr als 3% der Elementlänge von einer Idealeinbaulinie (welche einer geplanten Einbaulinie und damit einer Sollanordnung entspricht) abweichen, die Bemessungswiderstände >= den Bemessungsschnittgrößen sind. Beispielsweise können die Abweichungen zwischen Ist- und Soll-Zustand außerhalb vorgegebener Toleranzen liegen, wenn ein oder mehrere Nachbarelemente nicht einer vorgegebenen Spezifikation entsprechen oder das Bauelement selbst eine Soll-Spezifikation nicht erfüllt. Damit erfolgt eine Freigabe eines nächsten Bauschritts nur, wenn Fehler beim Einbau oder bei der Wahl des Bauelements ausgeschlossen werden können, bzw. wenn Abweichungen innerhalb eines hinsichtlich Sicherheit und Statik noch tolerierbaren Intervalls liegen.

In einem weiteren Ausführungsbeispiel sind die weiteren Verfahrensschritte eines Transports des Bauelements zu einer Baustelle sowie das darauffolgende Empfangen und Speichern von Logistikdaten des Bauelements vorgesehen. Es kann vorgesehen sein, dass der Schritt des Transports des Bauelements zu einer Baustelle, an der das Bauelement verbaut werden soll, im Anschluss an die Herstellung des Bauelements in einem Fertigungsbetrieb erfolgt. Die Logistikdaten können transportwegspezifische und transportmittelspezifische Daten umfassen. Dabei können transportwegspezifische Daten z.B. Informationen zum Weg zwischen Fertigungsbetrieb und Baustelle einschließlich der Ort möglicher Zwischenlagerungen und deren entsprechenden Dauer umfassen. Transportmittelspezifische Daten können Informationen z.B. zum mit dem Transport betrauten Unternehmen, sowie zu den verwendeten Transportmitteln wie LKW, Schiff, Flugzeug umfassen.

In einem weiteren Ausführungsbeispiel ist der Schritt der Navigation des Bauelements zu einem vorübergehenden Lagerort am Ort des geplanten Einbaus, d.h. zu einem vorübergehenden Lagerort auf der Baustelle vorgesehen. Dieser Schritt kann nach dem Transport des Bauelements zur Baustelle und optional nach dem Empfangen und Speichern von Logistikdaten des Bauelements erfolgen. Die Navigation des Bauelements sowie die Wahl des Lagerortes auf der Baustelle können dabei zumindest auf einer Optimierung der Bauzeit basieren. Die Navigation zu dem Lagerort kann beispielsweise mit mindestens einem der folgenden Mittel Kran, Gabelstapler, Lastwagen und/oder Roboter erfolgen. Bei dem vorübergehenden Lagerort kann es sich bei einem in Nähe des vorgesehenen Einbauortes gelegenen Ort handeln. Beispielsweise können eine oder mehrere Paletten mit Bauelementen, z.B. tragenden Dämmelementen zum Verbau an einem Balkon oder Vordach, an einen Ort in einem bereits fertiggestelltes Stockwerk eines Gebäudes verbracht werden, der sich in der Nähe des oder der zu bauenden Balkone befindet. Alternativ kann auch ein Lagerort in größerer Entfernung zum Einbauort eines Bauelementes vorgesehen sein, etwa, wenn vor Einbau des entsprechenden Bauelementes mehrere andere Bauschritte zunächst fertigzustellen sind. Damit das Bauelement oder eine Palette mit entsprechenden Bauelementen nicht die zunächst auszuführenden Bauschritte behindern, kann eine zwischenzeitige Lagerung beispielsweise in einem noch nicht bebauten und derzeit freien und zur Lagerung geeigneten Gebiet des Baugeländes sinnvoll sein. In beiden Fällen kann durch die Wahl des Lagerortes ein zügiger Fortgang des Bauvorhabens unterstützt und damit eine Bauzeit optimiert werden.

In einem weiteren Ausführungsbeispiel ist der Schritt des Ansteuerns und Lenken eines Krans oder Roboters zum Einbau des Bauelements an einer Baustelle vorgesehen. Dabei kann das Ansteuern und Lenken auf Baustellenlogistikdaten basieren. Die Baustellenlogistikdaten können dabei Informationen zum aktuellen Stand des Baus, z.B. welche Gebäudeteile oder Stockwerke bereits fertiggestellt sind, welche räumlichen Koordinaten diese in einem geeigneten Bezugssystem aufweisen, sowie Umgebungsinformationen umfassen. Weiterhin können die Baustellenlogistikdaten Informationen zu möglichen Zwischenlagern, d.h. vorübergehenden Lagerorten von zu verbauenden Bauelementen umfassen. Vermittels der Nutzung von Baustellenlogistikdaten kann eine gesamte Bauzeit bzw. zumindest eine Einbauzeit eines einzelnen Bauelements verkürzt und/oder entsprechend optimiert werden.

In einem weiteren Ausführungsbeispiel werden auf das Bauelement bezogene Daten auf einem Server oder in einer Cloud gespeichert. Mit anderen Worten ist die Datenbank welche die auf das Bauelement bezogenen Daten umfasst auf einem Server oder in einer Cloud gespeichert.

Gemäß einem zweiten Aspekt der Erfindung ist ein System zur Datenverarbeitung einer Vielzahl von Daten eines Bauelements angegeben, wobei das System dazu ausgeführt ist, Verfahrensschritte eines oben beschriebenen Verfahrens durchzuführen. Das System kann dabei zumindest eine der folgenden Einheiten - eine Erzeugungseinheit, eine Speichereinheit, eine Empfangseinheit sowie eine Vergleichseinheit - umfassen. Dabei ist die Erzeugungseinheit zumindest dazu eingerichtet, Stammdaten und/oder individuelle Stammdaten eines Bauelements zu erzeugen. Die Empfangseinheit ist zumindest dazu eingerichtet, Produktionsdaten und/oder Einbaudaten des Bauelements zu empfangen. Die Speichereinheit ist zumindest dazu eingerichtet, die auf das Bauelement bezogenen Daten zu speichern und die Vergleichseinheit ist zumindest dazu eingerichtet, einen Soll-Zustand mit einem Ist-Zustand eines Einbaus des Bauelements zu vergleichen.

Es kann beispielsweise vorgesehen sein, dass das System durch einen oder mehrere Nutzer bedient werden kann, welche beispielsweise durch die Eingabe von Befehlen über eine Tastatur oder einen Bildschirm oder durch sprachliche Anweisungen das System veranlassen, unter anderem die Stammdaten und/oder individuellen Stammdaten zu erzeugen und in der Datenbank zu speichern.

Gemäß einem weiteren Ausführungsbeispiel weist das System weiterhin eine Freigabeeinheit auf, wobei die Freigabeeinheit einem Nutzer die Freigabe eines nächsten Bauschritts anzeigt. Beispielsweise kann es sich dabei um eine Anzeige auf einem Bildschirm eines Computers oder portablen Kommunikationsgerätes handeln, mittels derer einem Nutzer angezeigt wird, dass ein nächster Bauschritt freigegeben ist. Eine solche Freigabe kann erfolgen, nachdem mittels des Systems ein Soll-Zustand mit einem Ist-Zustand vergleichen wurde, und die Abweichungen zwischen Soll- und Ist-Zustand innerhalb vorgegebener Toleranzen lagen. Andernfalls kann vorgesehen sein, dass durch das System, mittels z.B. einer Anzeige auf einem Bildschirm, einem Nutzer mitgeteilt wird, dass eine Freigabe noch nicht erfolgt ist. Optional können die Gründe, die eine Freigabe verhindern, dem Nutzer auf dem Bildschirm angezeigt oder dem Nutzer vorgelesen werden. Es kann weiter vorgesehen sein, dass dem Nutzer beispielsweise auf einem Bildschirm Schritte angezeigt werden, die er oder ein Kran/Roboter während des ordnungsgemäßen Verbauens des Bauelements oder als Korrekturmaßnahmen nach fehlerhaftem Verbauen auszuführen haben, um eine Freigabe eines nächsten Bauschritte zu erreichen.

Gemäß einem dritten Aspekt der Erfindung ist ein Kommunikationsgerät angegeben, welches ein oben beschriebenes System umfasst und weiterhin die folgenden Komponenten aufweist: eine Schnittstelle zum Einlesen von Daten aus einer externen Datenbank, eine Schnittstelle zu Positionsbestimmung, sowie eine Schnittstelle zum Senden von Daten an eine externe Datenbank.

Bei dem Kommunikationsgerät kann es sich beispielsweise um ein portables Gerät, z.B. ein Smartphone, I-Phone, oder aber auch um eine Scanpistole handeln.

Gemäß einem vierten Aspekt der Erfindung ist ein Computerprogrammprodukt angegeben, welches Befehle umfasst, welche bei der Ausführung durch einen Prozessor eines Computers letzteren veranlassen, ein Verfahren gemäß oben beschriebener Verfahrensschritte auszuführen.

Gemäß einem fünften Aspekt der Erfindung ist ein computerlesbares Medium angegeben, auf dem das vorgenannte Computerprogrammprodukt abgespeichert ist.

### KURZE BESCHREIBUNG DER FIGUREN

Fig. 1 zeigt eine schematische Darstellung eines computergestützten Verfahrens und eines Systems gemäß einem Ausführungsbeispiel der Erfindung.
Fig. 2 zeigt eine schematische Darstellung eines computergestützten Verfahrens gemäß einem weiteren Ausführungsbeispiel der Erfindung.
Fig. 3 zeigt eine schematische Darstellung eines Kommunikationsgeräts gemäß einem weiteren Ausführungsbeispiel der Erfindung.

Die Darstellungen der Figuren sind schematisch und nicht maßstäblich. Die Verwendung von Bezugszeichen in den Ansprüchen ist als nicht einschränkend anzusehen.

### DETAILLIERTE BESCHREIBUNG VON AUSFÜHRUNGSBEISPIELEN

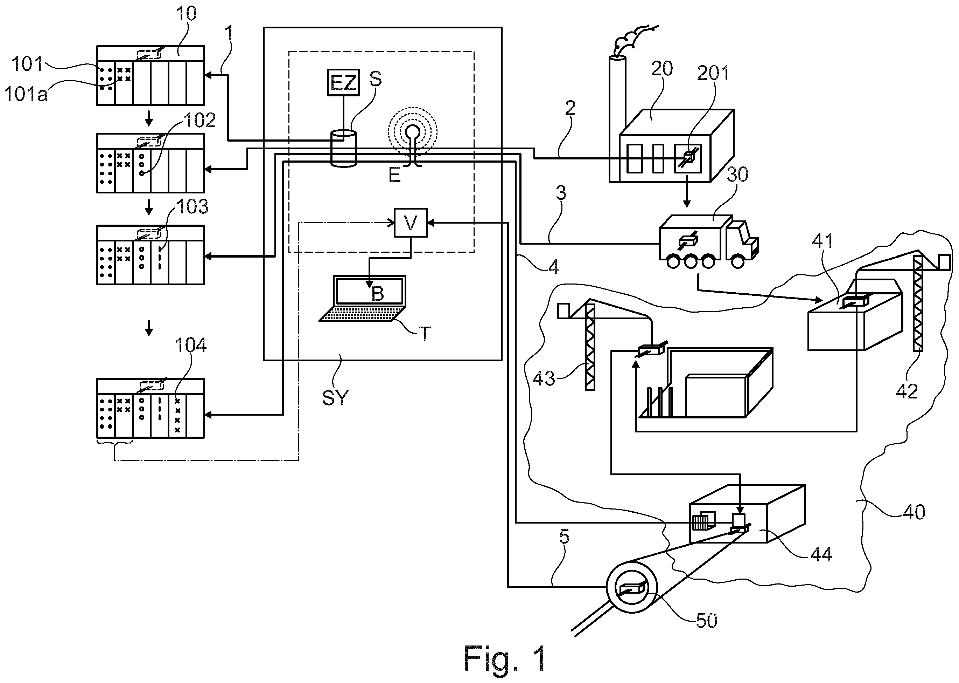

Fig. 1 zeigt eine schematische Darstellung eines computergestützten Verfahrens sowie eines Systems zur Datenverarbeitung gemäß einem Ausführungsbeispiel. Das System SY umfasst dabei eine Erzeugungseinheit, die zumindest zur Erzeugung von Stammdaten 101 und/oder individuellen Stammdaten 101a eines Bauelements 201 ausgelegt ist. Des Weiteren umfasst das System SY eine Speichereinheit S, eine Empfangseinheit E, eine Vergleichseinheit V, sowie eine Freigabeeinheit B. Letztere Freigabeeinheit ist im in Fig. 1 gezeigten Beispiel als ein Bildschirm gezeigt, auf dem einem Nutzer des Systems zu entsprechender Zeit die Freigabe eines nächsten Bauschritts angezeigt werden kann. Desweitern umfasst das System SY eine Tastatur T, mittels derer ein Nutzer beispielsweise Befehle eingeben kann, mittels derer die Erzeugungseinheit angewiesen werden kann z.B. die Stammdaten 101 und/oder die individuellen Stammdaten 101a zu erzeugen. Die Speichereinheit S ist zumindest dazu eingerichtet, auf das Bauelement bezogene Daten, unter anderem die Stammdaten 101 und/oder die individuellen Stammdaten 101a, zu speichern.

Gemäß dem in Fig. 1 gezeigten Ausführungsbeispiel werden in einem ersten Verfahrensschritt 1 zunächst mittels der Erzeugungseinheit Stammdaten 101 und/oder individuelle Stammdaten 101a eines Bauelements erzeugt, welche durch den Speicher S in einer Datenbank 10 hinterlegt werden. Die Stammdaten 101 umfassen dabei produktspezifische Eigenschaften des Bauelements, z.B. eine der Eigenschaften Material, Gewicht, räumliche Abmessungen, Seriennummer, Bemessungswiderstände, Brandschutzklassifizierungen, Wärmeleitfähigkeiten, Steifigkeiten/Verformungseigenschaften und/oder Qualitätssicherungsdaten. Die individuellen Stammdaten 101a umfassen einbauspezifische Eigenschaften wie beispielswiese eine Einbauposition, eine spezifische Einbauanleitung, Bauobjektdaten, Systeminformationen hinsichtlich z.B. mindestens eines Nachbarelements, des lichten Abstands zu mindestens einem Nachbarelement, und/oder Daten zur erforderlichen Qualität des Ortbetons.

Beispielsweise kann ein Nutzer des Systems, etwa ein Bauplaner, Architekt oder Statiker, das System nutzen, und im Zuge der Planung gewünschte oder geforderte Eigenschaften, die in den Stammdaten und/oder den individuellen Stammdaten erfasst werden können, festlegen bzw. an einem Bildschirm B des Systems anwählen. Dies kann beispielsweise in Form von am Bildschirm ankreuzbaren Kästchen in einer Liste von möglichen Eigenschaften des Bauelements geschehen. Es ist aber auch denkbar, dass durch z.B. den oder die Architekten eine Planungssoftware verwendet wird, die direkt eine Liste erforderlicher Eigenschaften eines Bauelements erstellt. Mittels der Erzeugungseinheit E können die entsprechenden Eigenschaften beispielsweise in Stammdaten 101 und/oder individuelle Stammdaten 101a eines beim Bau zu verwendenden Bauelements überführt werden.

Verfahrensschritt 1 betrifft eine Planungsphase, in der noch kein physisches Bauelement existiert, zu dem die Stammdaten 101 und/oder individuellen Stammdaten 101a korrespondieren. Das physische Bauelement 201 wird erst im zweiten in Fig. 1 dargestellten Verfahrensschritt angefertigt.

In einem nächsten Verfahrensschritt 2 erfolgt in Fig. 1 die Herstellung des Bauelements 201 im Fertigungsbetrieb 20, wobei das hergestellte Bauelement in den Stammdaten 101 und/oder den individuellen Stammdaten 101a angegebene Eigenschaften aufweist. Die bei der Fertigung entstehenden Produktionsdaten 102, wie z.B. Daten zum Zeitpunkt, zum Ort, zu den verwendeten Materialein bei der Herstellung, werden durch die Empfangseinheit E des Systems SY empfangen und an den Speicher S weitergeleitet. Durch letzteren werden die Produktionsdaten 102 in der Datenbank 10 gespeichert.

An die Fertigung des Bauelements anschließend erfolgt in einem nächsten Verfahrensschritt der Transport 30 zu einer Baustelle 40. Es versteht sich, dass der Transport zeitlich nicht unmittelbar nach der Fertigung des Bauelements 201 stattfinden muss, jedoch stattfinden kann. Auch ist es möglich, dass das Bauelement 201 nach der Fertigung zunächst an ein Zwischenlager am Ort der Fertigung, ein Zwischenlager an einen anderen Ort oder zu einem Zwischenhändler gebracht werden kann. Auch im Anschluss an eine Zwischenlagerung wird das Bauelement 201 jedoch zu einer Baustelle 40 transportiert werden.

Im Verfahrensschritt 3 werden Logistikdaten 103, welche transportwegspezifische sowie transportmittelspezifische Daten umfassen durch die Empfangseinheit E des Systems SY empfangen und an den Speicher S geleitet, durch welchen die Logistikdaten 103 in der Datenbank 10 gespeichert bzw. hinterlegt werden.

An der Baustelle 40 kann zunächst eine Navigation des Bauelements 201 zu einem vorübergehenden Lagerort 41 auf der Baustelle erfolgen. Die Navigation kann, wie in Fig. 1 dargestellt, mittels eines Krans 42 erfolgen. Es können auch Gabelstapler und/oder Roboter zum Einsatz kommen. Bei der Navigation und der Wahl des Lagerorts 41 kann zumindest eine Bauzeit optimiert werden. Dies kann z.B. bedeuten, dass das Bauelement 201 an einen vorübergehenden Lagerort in Nähe seines späteren Einbauorts gebracht wird, so dass keine weiten Wege anfallen, sobald das Bauelement tatsächlich eingebaut werden soll. Es kann sich aber auch günstig sein, das Bauelement an einem von seinem geplanten Einbauort weiter entfernten Lagerort 41 vorübergehend zu lagern, wenn damit beispielsweise mehr Platz für zuvor auszuführende Bauschritte am Ort des geplanten Einbaus des Bauelements 201 gegeben ist.

Nach einer vorübergehenden Lagerung am Lagerort 41 kann das Bauelement 201 durch Ansteuern und Lenken eines Krans 43, oder alternativ etwas auch eine Roboters, zu seinem Einbauort 44 gebracht werden. Das Ansteuern und Lenken kann dabei auf Baustellenlogistikdaten beruhen. Am Einbauort 44 erfolgt im nächsten Verfahrensschritt 4 der Einbau des Bauelements 201. Durch die Empfangseinheit E des Systems SY werden daraufhin zugehörige Einbaudaten 104 empfangen, an den Speicher S weitergeleitet, und durch letzteren in der Datenbank 10 hinterlegt. Die Einbaudaten 104 können dabei elementspezifische (z.B. Typ, Spezifikation) baustellenspezifische (z.B. bezüglich vorhandener bauseitiger Bewehrung) und lagespezifische Daten des Bauelements umfassen.

In einem Verfahrensschritt 5 erfolgt der Vergleich eines Soll-Zustands mit einem Ist-Zustand, wobei der Ist-Zustand den vorliegenden Einbauzustand des Bauelements 201 am Einbauort 44 beschreibt. Der Soll-Zustand kann beispielsweise auch Daten umfassen, die in den Stammdaten 101 und/oder den individuellen Stammdaten 101a erfasst sind. Auf den Soll-Zustand bezogene Daten werden an die Vergleichseinheit V des Systems SY geleitet und mit den korrespondierenden Daten des Ist-Zustands 50 verglichen. Der Ist-Zustand kann dabei beispielsweise mit einem Kommunikationsgerät, welches z.B. über eine Kamera zur Erfassung beispielsweise der Abstände zu den Nachbarelementen und ein GPS System zur Ermittlung der Einbaukoordinaten verfügt, ermittelt werden. Das Resultat des Vergleichs kann einem Nutzer des Systems auf einem Bildschirm B angezeigt werden. Sind die Abweichungen zwischen Soll- und Ist-Zustand innerhalb vorgegebener Toleranzen, so kann eine Freigabe eines nächsten Bauschritts auf dem Bildschirm angezeigt werden. Andernfalls kann auf dem Bildschirm angezeigt werden, welche Korrekturmaßnahmen vor einer Freigabe auszuführen sind. Beispielsweise kann es erforderlich sein, die Position des Bauelements 201 noch zu korrigieren. Dazu kann der Vergleich von Soll- und Ist-Zustand vor einem finalen Betonieren des Bauteiles erfolgen, so dass eine Veränderung z.B. der Position noch möglich ist.

In Fig. 1 ist in der linken Spalte schematisch die Datenbank, welche das digitale Pendants des Bauelements 201 abbildet, gezeigt, in der mit fortschreitenden Verfahrensschritten sukzessive weitere Daten das Bauelement 201 betreffend hinzugefügt werden. In der rechten Spalte der Fig. 1 finden sich die auf das physische Bauelement bezogenen Verfahrensschritte wieder. Durch das in der Mitte der Fig. 1 dargestellte System SY bzw. durch vermittels des Systems SY ausgeführte Verfahrensschritte werden das physische Bauelement 201 und das digitale Pendant miteinander verknüpft, bzw. die Daten, welche das Pendant bzw. Abbild beschreiben, auf den aktuellen Stand hinsichtlich der entsprechenden Eigenschaften des Bauelements gebracht.

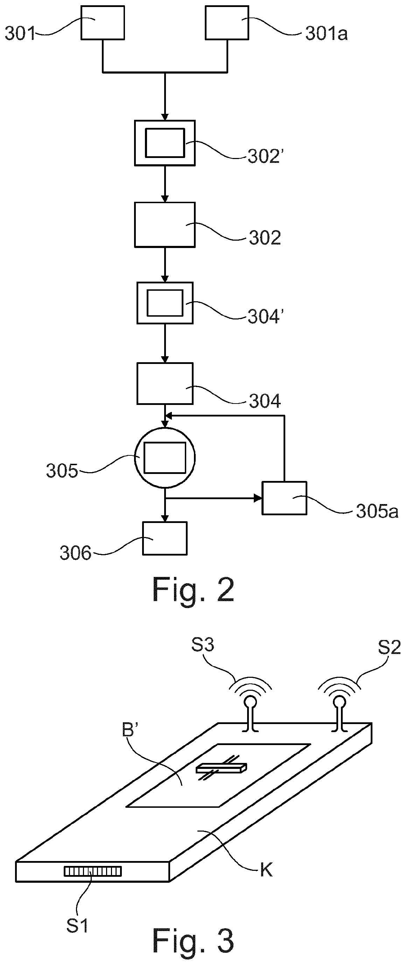

Fig. 2 zeigt schematisch Verfahrensschritte gemäß einem Ausführungsbeispiel der Erfindung. In einem ersten Schritt werden Stammdaten 301 und/oder individuelle Stammdaten 301a des Bauelements erzeugt und in einer Datenbank gespeichert. In einem nächsten Schritt 302' erfolgt die Herstellung des Bauelements in einem Fertigungsbetrieb, wobei das Bauelement Eigenschaften umfasst, die in den Stammdaten und/oder den individuellen Stammdaten angegeben sind. Im Verfahrensschritt 302 werden auf die Herstellung bezogene Daten des Bauelements durch eine Empfangseinheit eines Systems zur Datenverarbeitung empfangen und in der Datenbank gespeichert. Im Schritt 304' erfolgt der Einbau des Bauelements auf einer Baustelle. Korrespondierende Einbaudaten werden in Schritt 304 durch die Empfangseinheit empfangen und in der Datenbank gespeichert. Daran anschließend wird in Schritt 305 ein Vergleich eines Soll-Zustandes mit einem Ist-Zustand durchgeführt. Dabei entspricht der Soll-Zustand einem angestrebten Einbauzustand und der Ist-Zustand dem tatsächlichen Einbauzustand. Je nach Ergebnis des Vergleichs kann in einem Schritt 305a eine Korrektur des Einbauzustands erfolgen, woraufhin nochmals Schritt 305, der Vergleich von Soll- und Ist-Zustand erfolgt. Liegen die Abweichungen zwischen den beiden vorgenannten Zuständen innerhalb vorgegebener Toleranzen, so kann in Schritt 306 eine Freigabe eines nächsten Bauschritts erfolgen.

Verfahrensschritte, die sich auf das digitale Pendant, d.h. das Abbild beziehen, sind in Fig. 2 mit einem einfach umrandeten Kästchen gezeigt. Auf das physische Bauelement bezogene Verfahrensschritte sind mit einem doppelt umrandeten Kästchen bezeichnet.

Fig. 3 zeigt ein Kommunikationsgerät K gemäß einem Ausführungsbeispiel der Erfindung. Das Kommunikationsgerät K kann ein System SY wie in Fig. 1 gezeigt umfassen. Weiterhin kann es aufweisen eine Schnittstelle S1 zum einlesen von Daten aus einer externen Datenbank. In Fig. 3 ist diese Schnittstelle exemplarisch als eine Schnittstelle zum kabelgebundenen Einlesen von Daten gezeigt. Des Weiteren ist eine Schnittstelle zur Positionsbestimmung in Form eines GPS-Senders gezeigt. Ein Sender S' ermöglicht das Senden von Daten an eine externe Datenbank. Das Gerät K kann weiterhin z.B. eine Kamera aufweisen, mittels derer ein Ist-Zustand ermittelt werden kann. Auch kann auf dem Bildschirm des Geräts K eine Freigabe eines nächsten Bauschritts oder ein Korrekturbedarf vor einer entsprechenden Freigabe signalisiert werden.

Ergänzend sei darauf hingewiesen, dass "aufweisend" keine anderen Elemente oder Schritte ausschließt und "ein" oder "eine" keine Vielzahl ausschließt. Ferner sei daraufhingewiesen, dass die Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Insbesondere sind Bezugszeichen in den Ansprüchen nicht als Einschränkung anzusehen.

## Patentansprüche

1. **Computergestütztes Verfahren** zur Erfassung und Verwaltung einer Vielzahl von Daten eines Bauelements zum Errichten eines Bauwerks, das Verfahren aufweisend die Schritte:
- **Erzeugen von Stammdaten** (101) des Bauelements (201) und **Speichern** der Stammdaten (101) in einer Datenbank (10),
wobei die Stammdaten produktspezifische Eigenschaften des Bauelements umfassen und/oder
**Erzeugen von individuellen Stammdaten** (101a) des Bauelements (201) und **Speichern** der individuellen Stammdaten in der Datenbank (10),
wobei die individuellen Stammdaten einbauerforderliche produktspezifische Eigenschaften des Bauelements umfassen;
- **Herstellen** des Bauelements (201) in einem Fertigungsbetrieb (20),
wobei das Bauelement in den Stammdaten (101) und/oder den individuellen Stammdaten (101a) angegebene Eigenschaften aufweist;
- **Empfangen von Produktionsdaten** (102) des Bauelements und **Speichern** der Produktionsdaten in der Datenbank (10);
- **Einbau** des Bauelements auf einer Baustelle (40);
- **Empfangen von Einbaudaten** (104) des Bauelements (201) und **Speichern** der Einbaudaten in der Datenbank (10),
wobei die Einbaudaten baustellenspezifische und lagespezifische Daten des Bauelements umfassen;
- **Vergleich eines Soll-Zustandes** mit einem **Ist-Zustand** (50),
wobei der Soll-Zustand einen angestrebten Einbauzustand und der Ist-Zustand einen vorliegenden Einbauzustand beschreibt;
- **Freigabe eines nächsten Bauschritts.**

2. Verfahren nach Anspruch 1, wobei die Freigabe des nächsten Bauschrittes erfolgt, wenn die Abweichungen des Ist-Zustands vom Soll-Zustand innerhalb vorgegebener Toleranzen liegen.

3. Verfahren nach einem der vorherigen Ansprüche, weiterhin aufweisend die Schritte
- **Transport** (30) des Bauelements (201) zu der Baustelle (40),
- **Empfangen und Speichern von Logistikdaten** (103) des Bauelements,
wobei die Logistikdaten transportwegspezifische und transportmittelspezifische Daten umfassen;
wobei der Transport des Bauelements nach dem Schritt der Herstellung des Bauelements erfolgt.

4. Verfahren nach einem der vorherigen Ansprüche, weiterhin aufweisend die Schritte
- **Navigation des Bauelements** (201) zu einem vorübergehenden **Lagerort** (41) am Ort des geplanten Einbaus,
wobei die Navigation und die Wahl des Lagerorts zumindest auf einer Optimierung einer Bauzeit basiert.

5. Verfahren nach einem der vorherigen Ansprüche, weiterhin aufweisend die Schritte
- **Ansteuern und Lenken** eines Krans (42) oder Roboters zum Einbau des Bauelements an der Baustelle,
wobei das Ansteuern und Lenken auf Baustellenlogistikdaten basiert.

6. Verfahren nach einem der vorherigen Ansprüche, wobei die auf das Bauelement bezogenen Daten auf einem **Server oder in einer Cloud** gespeichert werden.

7. **System** (SY) zur Datenverarbeitung einer Vielzahl von Daten eines Bauelements nach einem Verfahren der vorstehenden Ansprüche, aufweisend:
- eine Erzeugungseinheit (EZ),
- eine Speichereinheit (S),
- eine Empfangseinheit (E),
- Vergleichseinheit (V),
wobei die Erzeugungseinheit dazu eingerichtet ist, Stammdaten (101) und/oder individuelle Stammdaten (101a) eines Bauelements (201) zu erzeugen,
wobei die Empfangseinheit dazu eingerichtet ist, Produktionsdaten (102) und Einbaudaten des Bauelements zu empfangen,
wobei die Speichereinheit dazu eingerichtet ist, die auf das Bauelement bezogenen Daten zu speichern,
wobei die Vergleichseinheit dazu eingerichtet ist, einen Soll-Zustand eines Einbaus des Bauelements mit einem Ist-Zustand (50) eines Einbaus des Bauelements zu vergleichen.

8. System nach Anspruch 7, weiterhin aufweisend:
- eine Freigabeeinheit (B),
wobei die Freigabeeinheit einem Nutzer die Freigabe eines nächsten Bauschritts anzeigt.

9. System nach einem der Ansprüche 7 oder 8,
wobei die produktspezifischen Eigenschaften des Bauelements (201) zumindest eine der Eigenschaften Material, Gewicht, räumliche Abmessungen, und/oder Seriennummer umfassen

10. System nach einem der Ansprüche 7 bis 9,
wobei die einbauerforderlichen produktspezifischen Eigenschaften des Bauelements (201) zumindest eine der Eigenschaften umfassen.

11. **Kommunikationsgerät** (K) umfassend ein System (SY) nach einem der Ansprüche 7 - 10, das Gerät weiterhin aufweisend:
- eine Schnittstelle (S1) zum Einlesen von Daten aus einer externen Datenbank,
- eine Schnittstelle zur Positionsbestimmung (S2),
- eine Schnittstelle zum Senden von Daten an eine externe Datenbank (S3).

12. **Computerprogrammprodukt,** umfassend Befehle, die bei der Ausführung
durch einen Prozessor eines Computers diesen veranlassen, ein Verfahren nach einem der Ansprüche 1 bis 6 auszuführen.

13. **Computerlesbares Medium,** auf dem das Computerprogrammprodukt nach Anspruch 12 abgespeichert ist.
